# EUROPÄISCHE PATENTSCHRIFT

(11) **EP 0 484 482 B1**
(45) Veröffentlichungstag und Bekanntmachung des Hinweises auf die Patenterteilung: **28.06.1995**
(21) Anmeldenummer: 91908913.6
(22) Anmeldetag: 21.05.1991
(51) Int. Cl.: H04Q 11/00, H04B 10/20

(54) **CODEWORT-ERKENNUNGSEINHEIT UND VERWENDUNG DERSELBEN**
CODE WORD RECOGNITION UNIT AND ITS USE
UNITE DE RECONNAISSANCE DE MOTS DE CODE ET SON UTILISATION

(30) Priorität: 23.05.1990 CH 1769/90
(43) Veröffentlichungstag der Anmeldung: 13.05.1992
(73) Patentinhaber: ASCOM TECH AG, CH-3018 Bern (CH)
(72) Erfinder: VOGEL, Paul, CH-3612 Steffisburg (CH); MARTINSON, Thomas, CH-1700 Fribourg (CH)
(74) Vertreter: Schwerdtel, Eberhard, Dr.
(86) Internationale Anmeldenummer: CH9100122
(87) Internationale Veröffentlichungsnummer: WO9118485

(56) Entgegenhaltungen:
- PHOTONIC SWITCHING TOPICAL MEETING, Incline Village, Nevada, 18. - 20. März 1987, Seiten 144-146; T.S. RZESZEWSKI et al.: "A photonic switch architecture utilizing code division multiplexing", siehe Seite 144, Zeilen 1-15; Seite 145, Zeilen 2-3,34-43; Figur 1
- JOURNAL OF LIGHTWAVE TECHNOLOGY, Band LT-4, Nr. 5, Mai 1986, Seiten 547-554, (New York, US); P.R. PRUCNAL et al.: "Spread spectrum fiber-optic local area network using optical processing", siehe Seite 547, rechte Spalte, Zeilen 1-4, Zeile 38 - Seite 548, linke Spalte, Zeile 9; Seite 549, linke Spalte, Zeile 39 - rechte Spalte, Zeile 15; Seite 552, rechte Spalte, Zeile 14 - Seite 553, linke Spalte, Zeile 2; Figur 7
- OPTICAL ENGINEERING, Band 29, Nr. 3, März 1990, Seiten 170-182, (Bellingham, US); P.R. PRUCNAL et al.: "Self-routing photonic switching with optically processed control", siehe Seite 171, rechte Spalte, Zeilen 21-25,33-37; Seite 172, rechte Spalte, Zeilen 1-3, Zeile 10 - Seite 173, linke Spalte, Zeile 7, Zeilen 21-28,36-38, Zeile 41 - Seite 174, linke Spalte, Zeile 4; Figuren 3-6
- IEEE CIRCUITS AND DEVICES MAGAZINE, Band 5, Nr. 4, Juli 1989, Seiten 39-43, (New York, US); H.S. HINTON: "Photonic time-division switching systems", siehe Seite 40, linke Spalte, Zeile 27 - rechte Spalte, Zeile 16; Seite 41, linke Spalte, Zeilen 9-13,33-36, rechte Spalte, Zeile 33 - Seite 42, linke Spalte, Zeile 22, Zeilen 30-34; Figuren 3,6,8,9
- IEEE GLOBAL TELECOMMUNICATIONS CONFERENCE & EXHIBITION, Dallas, Texas, 27. - 30. November 1989, Seiten 1647-1654; S. AMEMIYA et al.: "An architecture of optical passive bus for broadband CPN (Customer Premises Network)", siehe Seite 1647, rechte Spalte, Zeilen 19-22; Seite 1648, rechte Spalte, Zeile 52 - Seite 1649, linke Spalte, Zeile 1; Seite 1650, rechte Spalte, Zeilen 9-32; Figuren 1-4,6

## Beschreibung

Die Erfindung betrifft eine Codewort-Erkennungseinheit für einen Zugriffsknoten einer optischen Übertragungseinrichtung. Sie betrifft weiter die Anwendung solcher Einheiten.

Übertragungseinrichtungen und diverse Arten der Informationsübertragung über Übertragungsstrecken sind allgemein bekannt. In neuerer Zeit werden aus verschiedenen Gründen optische Übertragungsstrecken zunehmend wichtig. Neben den optischen Punkt/Punkt-Verbindungen sind auch kompliziertere Netzstrukturen mit optischen Leitungen bekannt. So beschreibt z.B. B. Viklund in einem Artikel "Optical fibres in local area networks", Communications/Communications International, October 1985, Seite 19 ff. verschiede Netzstrukturen mit Glasfaserkabeln für Verteilnetze und für Netze mit individuell aufbaubaren Verbindungen zwischen diversen Teilnehmern. Bei letzteren ist vor allem eine Ringstruktur günstig. Die Teilnehmerstellen einer optischen Übertragungsleitung der letztgenannten Art sind über optoelektrische Koppler an die jeweils verwendete Faser angeschlossen.

Auf der Basis von z.B. InP-Halbleitermaterial gibt es heute Bauelemente für optische Systeme, z.B. Koppler, Weichen und Modulatoren, die zur Lichtbeeinflussung elektrooptische Effekte ausnützen. Diese Elemente arbeiten bis zu Frequenzen im Gigahertz-Bereich.

Zur Übermittlung von Information ist die Verwendung von adresscodierten Paketen allgemein bekannt. Solche Pakete weisen einen Kopfteil (header) und einen Infoteil auf, wobei der Kopfteil alle für das jeweilige Paket und die beteiligten Einrichtungen notwendigen Daten enthält, z.B. eine Zieladresse, Angaben über die Art des Paketes, Überwachungsbits usw. Der Infoteil steht für die zu übertragende Nutzinformation zur Verfügung.

T.S. Rzeszewski beschreibt im Artikel "A photonic switch architecture utilizing code division multiplexing", PHOTONIC SWITCHING TOPICAL MEETING, Nevada, März 1987 eine adressgesteuerte optische Vermittlungs einrichtung, bei der orthogonale Codes zur Adressierung der Ausgangsports verwendet werden.

Beim Empfang einer über eine optische Leitung ankommenden Information ist es unumgänglich, dass dabei wenigstens ein Teil des die Information tragenden Lichtstromes verbraucht wird. Weiter muss jede empfangende Teilnehmerstelle auf den Bittakt und auf den Takt der vorbeilaufenden Pakete synchronisiert sein.

Die Aufgabe der Erfindung besteht nun darin, unter Ausnützung der genannten Bauelemente eine Übertragungseinrichtung anzugeben, die weitgehend ohne elektrische Regeneratoren auskommt. Insbesondere soll eine Adressenerkennungseinheit angegeben werden, die im Aufbau einfach und in der Wirkungsweise unkompliziert ist.

Die Lösung dieser Aufgabe wird durch den kennzeichnenden Teil von Anspruch 1 gegeben. Die abhängigen Ansprüche geben Ausgestaltungen der Erfindung an.

Mit der erfindungsgemässen Lösung ergibt sich die Möglichkeit, flexible Übertragungseinrichtungen anzugeben, die wegen ihres vermehrt optischen Aufbaus gegenüber den vergleichbaren, bisher bekannten Einrichtungen erhebliche Vorteile bringen. Insbesondere ist zu erwähnen eine hervorragende Immunität gegen elektromagnetische Interferenzen, was wieder positiven Einfluss auf die Arbeitsgeschwindigkeit und die Empfindlichkeit hat. Die Adressenerkennungseinheit arbeitet sodann mit einem Integrierer, der im Vergleich zum Bittakt der Adressen und der Übertragungsstrecke langsam ist und von Natur aus problemlos auf Verzerrungen und ähnliches reagiert. Hierdurch ist die Adressenerkennungseinheit geeignet für schnelle Übertragungsleitungen bis zu Taktfrequenzen von z.B. mehreren GBit. Bei geeigneter Wahl der Adressen ergibt sich eine sehr gute Unterscheidbarkeit derselben.

Im folgenden wird die Erfindung anhand von acht Figuren beispielsweise näher beschrieben. Es zeigen:
Fig. 1 - schematische Darstellung einer optischen Übertragungseinrichtung
Fig. 2 - schematische Darstellung eines optischen Richtungskopplers, sehr stark vergrössert
Fig. 3 - Symboldarstellung des Richtungskopplers
Fig. 4 - Blockschaltbild einer ersten Codewort-Erkennungseinheit
Fig. 5 - Blockschaltbild einer zweiten Codewort-Erkennungseinheit
Fig. 6 - Satz von sechzehn Codewörtern
Fig. 7 - Für den Satz von Fig. 6 berechnete erste Spannungsimpulse
Fig. 8 - Für den Satz von Fig. 6 berechnete zweite Spannungsimpulse.

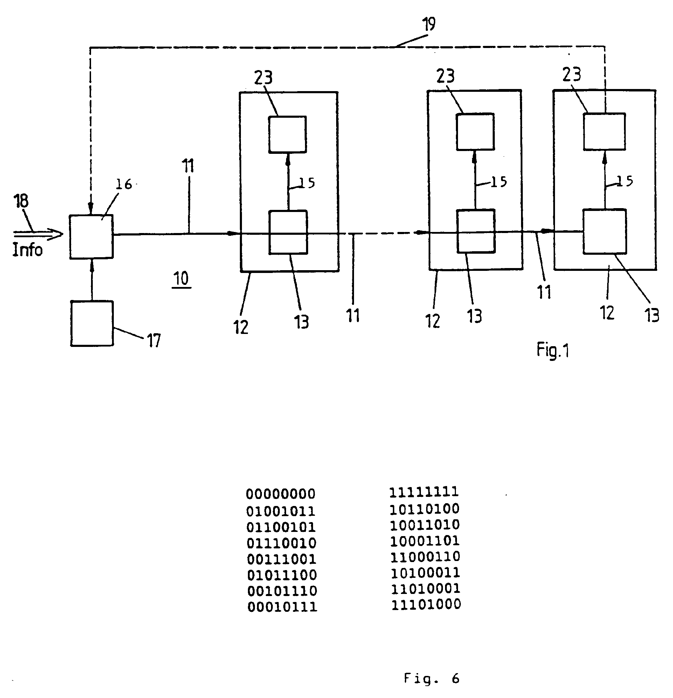

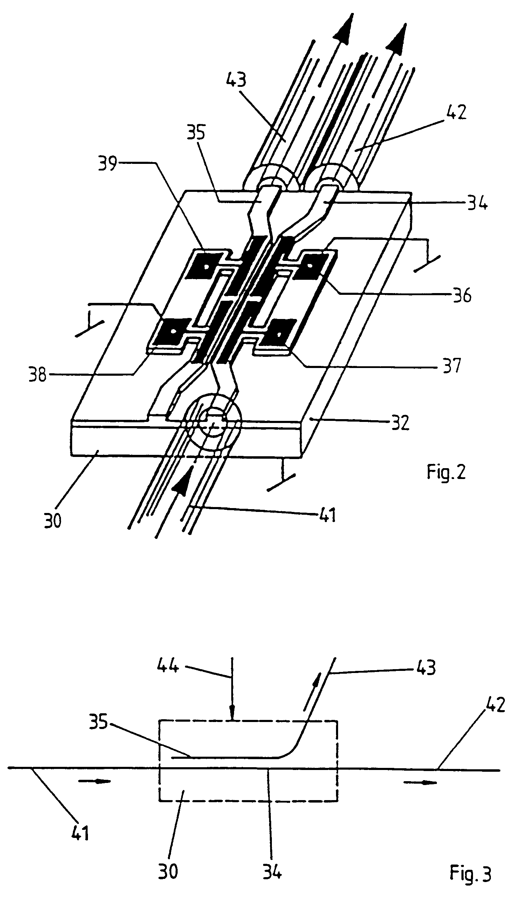

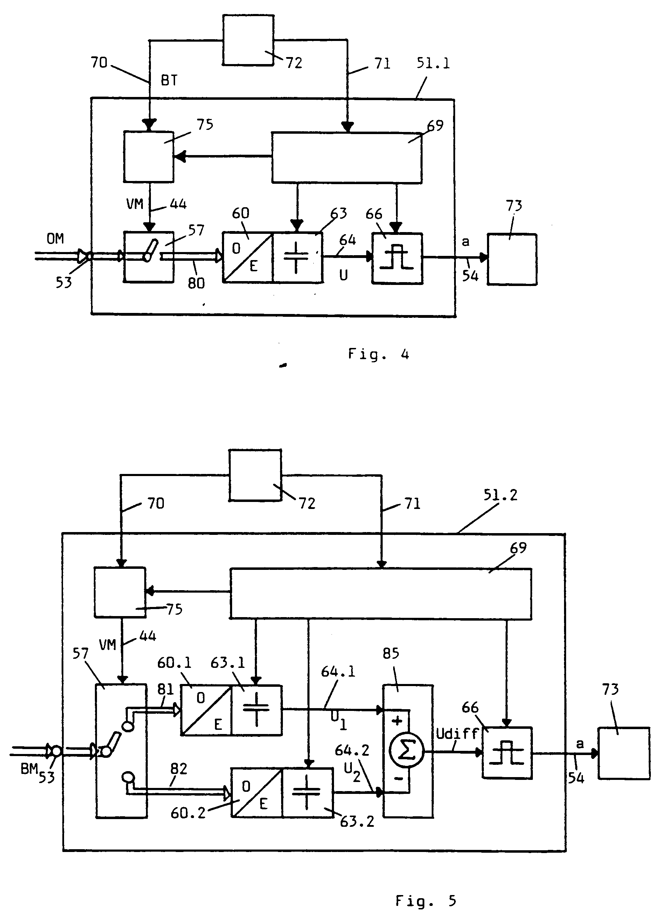

Fig. 1 zeigt schematisch eine Übertragungseinrichtung 10, auf der Information in Form adressierter Pakete in Pfeilrichtung übertragen wird. Als Übertragungsmedium dient eine optische Faser 11, insbesondere eine Monomodefaser. In diese Faser 11 ist seriell eine Mehrzahl von Zugriffsknoten 12 eingefügt, wodurch die Faser 11 zwar in Abschnitte unterteilt wird, der Lichtstrom insgesamt jedoch nicht unterbrochen wird. Jedem Zugriffsknoten 12 ist im allgemeinen eine Adresse zugeordnet, durch die er von allen jeweils anderen Knoten unterschieden ist. Es ist jedoch auch möglich, dass mehreren Knoten 12 eine gleiche Adresse zugeordnet ist.

Der Lichtfluss beginnt bei einer Sendeeinheit 16, insbesondere einem Halbleiterlaser, der einen im wesentlichen konstanten Gleichlichtstrom in den Anfang der Faser 11 einspeist und einem zugeordneten Modulator zum Modulieren dieses Gleichlichtstromes. Der modulierte Lichtstrom durchläuft die Faser 11 und passiert dabei unterbruchlos sämtliche Zugriffsknoten 12. Diese Knoten weisen Zugriffseinheiten 13 auf, die wie beschrieben den Lichtstrom nicht unterbrechen. Mit Hilfe dieser Zugriffseinheiten 13 ist jeder Knoten 12 in der Lage, im Lichtstrom enthaltene Information zu lesen. Diese Information kann zum einen in Paketen enthaltene Nutzinformation sein. Zum anderen kann diese Information Adressen, Angaben über die Pakete, Synchronisierungssignale usw. darstellen. Zum Empfang und zur Auswertung der Information dienen die Informationsempfänger 23, die über Verbindungen 15 mit den Zugriffseinheiten 13 verbunden sind.

Es ist günstig, wenn die Modulation des Lichtstromes so gewählt wird, dass vorhandenes Licht bzw. hohe Lichtleistung bzw. hohe Lichtintensität bzw. hell den Zustand logisch 1 und nichtvorhandenes Licht bzw. niedrige Lichtleistung bzw. niedrige Lichtintensität bzw. dunkel den Zustand logisch 0 darstellt.

Der Bittakt des Lichtstromes und die Pakete entstehen in der Sendeeinheit 16, indem deren Modulator durch eine Takterzeugungseinheit 17 und in Abhängigkeit von der als Balkenpfeil 18 angedeuteten, zu übertragenden Information gesteuert wird. Statt Pakete können auch Rahmen zur Gliederung des Lichtstromes dienen.

Die optische Faser 11 kann kreisförmig verlegt und der Empfänger 23 des letzten Zugriffsknotens 12 durch eine z.B. kurze elektrische Verbindung 19 mit der Sendeeinheit 16 verbunden sein. Hierdurch entsteht eine Ringanordnung, bei der die Sendeeinheit 16 die einzige Lichtquelle enthält. Der Empfänger 23 des letzten Zugriffsknotens 12 kann aber auch elektrisch mit der Sendeeinheit 16 einer weiteren Übertragungseinrichtung 10 verbunden sein, wodurch eine Verdoppelung der linearen Ausdehnung erreicht wird. Bei einer solchen Einrichtung wechseln dann aktive, mit einem Lichtsender ausgerüstete Sendeeinheiten 16 und passive, keinen Lichtsender enthaltende Knoten 12 einander ab.

Fig. 2 zeigt in schematischer, stark vergrösserter Darstellung einen integrierten optischen Richtungskoppler 30 als Herzstück der genannten Zugriffseinheiten 13. Der Richtungskoppler 30 weist auf einem Halbleitersubstrat 32 z.B. einem InP-Substrat, zwei benachbarte, optische Rippenwellenleiter 34, 35 auf, die von insgesamt vier metallischen Steuerelektroden 36 bis 39 bedeckt sind, über die elektrische Steuerspannungen anlegbar sind. Der Richtungskoppler ist auf seiner Eingangsseite mit dem einen Rippenwellerleiter 34 an eine ankommende Faser, insbesondere eine Monomodefaser 41 angeschlossen. Auf seiner Ausgangsseite ist er mit beiden Rippenwellenleitern 34, 35 an je eine abgehende Faser 42 bzw. 43 angeschlossen.

Der beschriebene, beispielsweise Richtungskoppler 30 arbeitet als Lichtweiche, wobei in Abhängigkeit von den an die Steuerelektroden 36 bis 39 angelegten Spannungen der über die Faser 41 ankommende Lichtstrom in beliebigem Verhältnis auf die beiden abgehenden Fasern 42, 43 aufteilbar ist. Fig. 3 zeigt eine Symbol-Darstellung des Richtungskopplers 30, die die Weichenfunktion zum Ausdruck bringen soll. Der Pfeil 44 symbolisiert dabei die elektrische Ansteuermöglichkeit, die über die Steuerelektroden 36 bis 39 (Fig. 2) gegeben ist.

Wird der Richtungskoppler 30 jeweils voll durchgeschaltet dann ergeben sich zwei "digitale" Schaltstellungen, und zwar eine, bei der der Lichtpfad vom Eingang des Kopplers zum jeweiligen Ausgang für einen Lichtstrahl durchlässig ist und eine zweite, bei der dieser Pfad gesperrt ist.

Fig. 4 zeigt ein Blockschaltbild einer Codewort-Erkennungseinheit 51.1. Diese dient in jedem Zugriffsknoten bovorzugt zum Erkennen der Adressen der vorbeilaufenden Pakete. Die Einheit 51.1 ist aber ganz allgemein einsetzbar zum Erkennen von speziellen Codes, zum Beispiel zum Erkennen von binären Zeichen zum Unterscheiden verschiedener Paket-Sorten.

Die Codewort-Erkennungseinheit 51.1 besitzt einen optischen Eingang 53, der der Verbindung 15 von Fig. 1 entspricht, und einen elektrischen Ausgang 54. In der Darstellung sind die elektrischen Verbindungen als einfache Pfeile und die optischen Verbindungen als Balkenpfeile dargestellt.

Die Codewort-Erkennungseinheit 51.1 umfasst ein elektrisch steuerbares, optisches Schaltglied 57, einen optoelektrischen Wandler 60, ein Integrationsglied 63, eine Schwellenschaltung 66, eine Steuerung 69 und einen Sequenzgeber 75. Hierzu kommen noch ein Taktgeber 72 und eine Entscheidungseinheit 73.

Der Taktgeber 72 ist mit der Steuerung 69 und dem Sequenzgeber 75 verbunden. Letzterer (75) ist mit dem Schaltglied 57 verbunden und die Steuerung 69 mit dem Sequenzgeber 75, dem Integrationsglied 63 und der Schwellenschaltung 66. Der Ausgang 54 verbindet die Schwellenschaltung 66 mit der Entscheidungseinheit 73.

Der Taktgeber 72 erzeugt einen Takt, der (theoretisch) exakt gleich ist dem Bit- und dem Pakettakt auf der optischen Faser 11 an der Stelle der jeweiligen Zugriffseinheit 13. Dieser Takt wird dem Sequenzgeber 75 über die Verbindung 70 zugeführt. Über die Verbindung 71 erhält die Steuerung 69 jeweils ein Triggersignal, sobald am Eingang 53 der Codewort-Erkennungseinheit 51.1 ein zu erkennendes Codemuster, z.B. eine Paketadresse, zu erwarten ist.

Der Sequenzgeber 75 gibt nun, ausgelöst durch die Steuerung 69, im Bittakt BT des Taktgebers 72 ein serielles, elektrisches Vergleichsmuster VM an das Schaltglied 57 ab.

Dieses Vergleichsmuster VM besteht aus einer Folge von mehreren Bits, d.h. Werten logisch 0 und 1. Es entspricht vollständig einem der verschiedenen von der Sendeeinheit 16 als Adressen oder sonstige Codes ausgesandten optischen Muster OM.

Als optisches Schaltglied 57 dient z.B. ein Richtungskoppler 30 der beschriebenen Art, der, gesteuert über seinen Steuereingang 44, den optischen Pfad zwischen dem optischen Eingang 53 und seinem einzigen Ausgang 80 entweder freigibt oder sperrt. Damit arbeitet das Schaltglied 57 als Ein/Aus-Schalter.

Alternativ kann das optische Schaltglied 57 als beliebiges Element ausgebildet sein, das die beschriebenen Funktionen erfüllt. Solche Elemente sind beispielsweise steuerbare, optische Verstärker, optische Modulatoren, gesteuerte Spiegel usw.

Der optoelektrischer Wandler 60 ist bevorzugt eine schnelle Fotodiode mit einem geeigneten, nachgeschalteten Verstärker. In diesem Fall bildet die Ausgangskapazität der Diode und die Eingangskapazität des räumlich eng an die Diode angekoppelten Verstärkers zusammen das Integrationsglied 63. Durch den schaltungstechnischen Aufbau des Verstärkes lässt sich die "virtuelle" Grösse des Integrationsgliedes, dessen RC-Zeit und sonstige Parameter beeinflussen. Das Integrationsglied 63 gibt an seinem Ausgang Spannungsimpulse U ab, deren Höhe ein Mass für ein jeweiliges Integral bildet.

Die Schwellenschaltung 66 ist eine Einheit, die in Art einer monostabilen Kippschaltung jeweils entscheidet, ob ein auftretender Spannungsimpuls U grösser oder kleiner als eine vorgegebene Triggerspannung ist. Die Schwellenschaltung 66 gibt jeweils ein Signal a über den Ausgang 54 an die Entscheidungseinheit 73 ab, die für eine Weiterbehandlung dieses Signals sorgt.

Die Codewort-Erkennungseinheit 51.1 arbeitet wie folgt: Die Steuerung 69 gibt aufgrund eines Taktsignals auf der Verbindung 71 die Arbeit frei. Das von der Faser 11 abgezweigte optische Muster OM erreicht während dessen über den optischen Eingang 53 das Schaltglied 57. Gleichzeitig, d.h. takt-und phasengerecht, gibt der Sequenzgeber 75 das elektrisches Vergleichsmuster VM an den Steuereingang 44 des Schaltgliedes 57 ab. Dieses schaltet hierdurch bitweise und in Abhängigkeit von der logischen Bedeutung des jeweiligen Bits des Vergleichsmusters VM das Licht bzw. besser die Hell/Dunkel-Folge des optischen Bitmusters OM zum optoelektrischen Wandler 60 durch oder sperrt den optischen Pfad.

Der optoelektrische Wandler 60 empfängt jeweils das durch das Schaltglied 57 durchgelassene Licht und wandelt dieses Licht proportional zu dessen jeweiliger Lichtleistung bzw. Lichtmenge in elektrische Ladung e um. Diese Ladung e baut im Integrationsglied 63 einen von den Mustern OM und VM gesamthaft abhängigen elektrischen Spannungsimpuls U auf. Die Schwellenschaltung 66 vergleicht die Höhe des Spannungsimpulses U mit ihrer Schwellenspannung und gibt auf den Ausgang 54 ein Signal a ab, das angibt, ob der Spannungsimpuls U grösser oder kleiner als die Schwellenspannung ist. Die Entscheidungseinheit 73 wertet dieses Signal a dann aus, während die Steuerung 69 das Integrationsglied 63 in seinen Ausgangszustand zurückstellt (Funktion "clear").

Sind das optische Bitmuster OM und das elektrische Vergleichsmuster VM gleich und erscheinen phasen- und taktgleich an den jeweiligen Eingängen des Schaltgliedes 57, liegt also Gleichheit und genauer Synchronismus vor, dann ergibt sich praktisch ein Zustand, wie er bei einem Korrelator als Autokorrelation bekannt ist. Dies bedeutet für den Spannungsimpuls U, dass dieser einen Extremwert erreicht, entweder einen Maximalwert Umax, weil alles Licht durchgelassen wird oder einen Minimalwert Umin, weil alles Licht gesperrt wird, also Lichtmenge Null. Welcher dieser Extremwerte erreicht wird, hängt dabei davon ab, welcher logische Wert, 1 oder 0, den Zuständen Licht bzw. kein Licht am Eingang 53 des Schaltgliedes 57 zugeordnet ist. Im folgenden wird angenommen, dass der Extremwert ein Maximalwert Umax ist.

Der Fall der genannten exakten Übereinstimmung zwischen optischem Muster OM und Vergleichsmuster VM tritt dann auf, wenn das gesuchte Muster, z.B. die eigene Adresse am Eingang 53 erscheint. In allen anderen Fällen, d.h. bei anderen Adressen, ist der jeweilige Spannungsimpuls U kleiner. Hierauf wird weiter unten noch näher eingegangen.

Fig. 5 zeigt das Blockschaltbild für eine zweite, etwas abgewandelte Codewort-Erkennungseinheit 51.2. Bei dieser bildet das Schaltglied 57 einen optischen Umschalter, dessen Eingang 53 und dessen zwei Ausgängen 81, 82 durch die Steuerung 69 und den Sequenzgeber 75 wahlweise optisch miteinander verbunden werden. Den Ausgängen 81, 82 sind zwei gleiche optoelektrische Wandler 60.1, 60.2 und zugeordnete Integrationsglieder 63.1, 63.2 nachgeschaltet. An deren Ausgänge 64.1, 64.2 ist eine Differenzbildungsstufe 85 angeschlossen, die die Differenz Udiff aus den beiden Spannungsimpulsen U1, U2 an den Ausgängen 64.1, 64.2 der Integrationsglieder 63.1, 63.2 bildet. Der hierbei entstehende Differenzspannungsimpuls Udiff wird der Schwellenschaltung 66 zugeführt.

Die Codewort-Erkennungseinheit 51.2 ist ansonsten gleich wie die beschriebene Codewort-Erkennungseinheit 51.1 (Fig. 4) aufgebaute und arbeitet ähnlich wie diese. Der Unterschied liegt darin, dass durch die gesteuerte, optische Umschaltung auf die beiden Ausgänge 81, 82 und durch die Differenzbildung in der Differenzbildungsstufe 85 eine schärfere Unterscheidung der verschiedenen auftretenden Adressen resultiert. Weiter ergibt sich ein verbessertes Verhalten beim Auftreten des stets unvermeidbaren Rauschens (Geräusch) und bei Abweichungen von der exakten Phasierung.

Im folgenden wird auf die Art der zu verwendenden und zu unterscheidenden Codewörter bzw. Adressen näher eingegangen. Diese Codewörter müssen aus verschiedenen Gründen eine ganze Reihe von Bedingungen erfüllen, von denen die wichtigsten nachfolgend aufgelistet sind:
· Alle zu vergleichenden Codewörter (bzw. Adressen) müssen die gleiche Länge aufweisen, d.h. sie müssen die gleiche Anzahl Bits besitzen.
· Alle Codewörter müssen die jeweils gleiche Anzahl von Bits des Wertes logisch 1 aufweisen, also gleiches "Gewicht" besitzen.
· Die Länge der Codewörter darf nicht zu lang, aber auch nicht zu kurz sein. Bei zu kurzen Codewörtern wird die "Interpretationsdynamik" relativ klein. Dies bedeutet, dass sich die verschiedenen Codewörter nur relativ schwer unterscheiden lassen. Weiter ist in diesem Fall der Satz der unterscheidbaren Codewörter recht klein, d.h. es gibt nur wenige zusammengehörige Codewörter. Zu lange Codewörter beeinflussen dagegen die Übertragungskapazität negativ, d.h. sie vergrössern den "Kopf" der Pakete.
· Die Codewörter müssen leicht zu generieren sein. Diese Forderung ist wichtig bei hohen Übertragungs-Bitraten, z.B. im GBit-Bereich.
· Die Codewörter müssen eine gewisse Resistenz gegenüber individuellen, kleinen Bitfehlern aufweisen.
· Es sollte bevorzugt ein Rundspruch-Codewort geben, das durch alle Zugriffsknoten 12 lesbar ist.

Fig. 6 zeigt einen ersten Satz von sechzehn Codewörtern, deren Länge 8 Bit beträgt und von denen vierzehn Wörter jeweils vier Bits des Wertes logisch 1 und des Wertes logisch 0 aufweisen. Dieser Satz erfüllt weitgehend die aufgelisteten Bedingungen und ist als (8, 16, 4)-Hadamard-C-Code ansich bekannt. (F.J. Mac Williams and N.J.A. Sloane: The Theory of Error Correcting Codes, Amsterdam: North Holland, 1981).

Hadamard-Codes existieren für (vermutlich) jede Länge, die ein Vielfaches von 4 ist. Die Codewörter eines solchen Codes sind jeweils (N, 2N, N/2)-Wörter, wobei N die Länge eines Codewortes bedeutet, 2N die Anzahl Codewörter des jeweiligen Satzes und N/2 die minimale Hamming-Distanz. Hierzu kommen ein Nur-Einsen-Codewort und ein Nur-Nullen-Codewort. Die beiden Halbsätze eines jeweiligen Codesatzes bilden Binär-Komplemente (0 und 1 sind jeweils gegenseitig vertauscht).

Die Codewörter von Fig. 6 lassen sich, abgesehen vom jeweils ersten Bit, durch zyklisches Vertauschen und gegebenenfalls durch zusätzliches Invertieren einfach erzeugen.

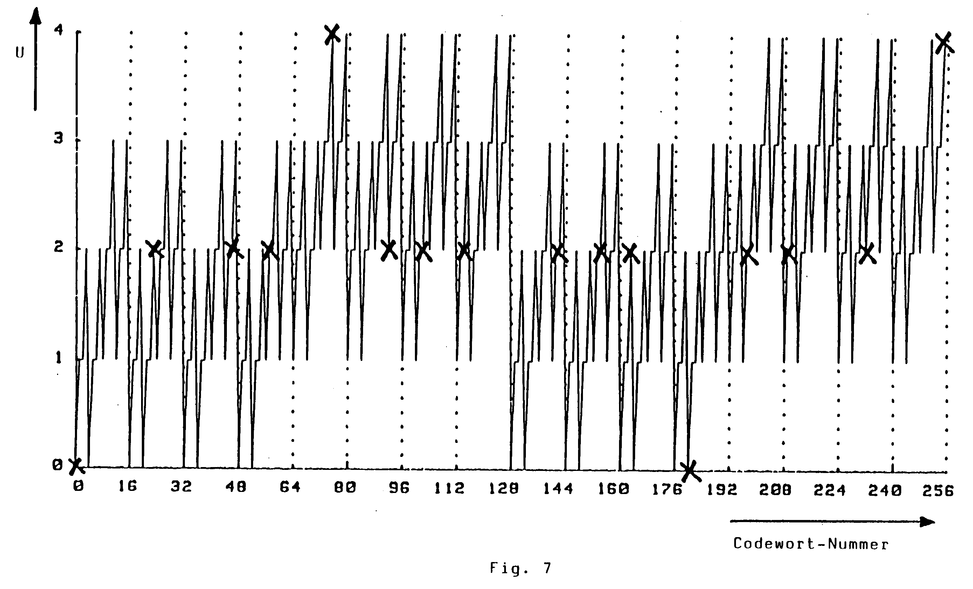

Fig. 7 zeigt für die erste Codewort-Erkennungseinheit 51.1 berechnete Werte der Spannungsimpulse U. Diese Impulse U sind als Ordinate in willkürlichen Einheiten aufgetragen, z.B. in mV. Auf der Abzsisse sind die zu vergleichenden Codewörter nebeneinander gestellt. Jedes Codewort besitzt eine Länge von 8 Bit und ist durch diejenige Dezimalzahl bezeichnet, die dem Codewort, gelesen als Dualzahl, beigeordnet ist. Insgesamt sind somit 2⁸ bzw. 256 Codewörter aufgezeichnet, jeweils durch einen Punkt, welche Punkte zur besseren Sichtbarmachung durch Verbindungslinien verbunden sind. Die Punkte derjenigen Codewörter, die in Fig. 6 aufgelistet sind, sind weiter durch Kreuze markiert.

Es ist für die Berechnung nun angenommen, dass das 75. Codewort als Adresse der betrachteten ersten Codewort-Erkennungseinheit 51.1 zugeteilt ist. In diesem Fall wird dieses Codewort dann jeweils als Vergleichsmuster VM durch den Sequenzgeber 75 an das Schaltglied 57 abgegeben. Entspricht auch das optische Muster OM dem 75. Codewort, so baut sich am Integrationsglied 63 (wie dargestellt) ein Spannungsimpuls U des Wertes 4 auf.

Erscheint am Eingang 53 der Codewort-Erkennungseinheit 51.1 dagegen ein anderes der Codewörter mit 4 Bit des Wertes logisch 1, dann ergeben sich jeweils Spannungsimpulse U des Wertes 2. Beim Erscheinen des nullten (0.) bzw. des 255. Codewortes ergeben sich kein Spannungsimpuls (U = 0) bzw. ein Impuls des Wertes 4.

Mit diesen Werten weist die ersten Codewort-Erkennungseinheit 51.1 eine Interpretationsdynamik ID von 2 Werteinheiten für alle Codewörter mit 4 Bit des Wertes logisch 1 auf. (Gegenüber dem 255. Codewort besteht dagegen keine Unterscheidungsmöglichkeit.) Die Schwellenschaltung 66 sollte mit ihrer Triggerspannung daher zwischen den Werten 2 und 4 eingestellt sein (abhängig vom Geräusch-Pegel), also beispielweise auf den Wert 3.

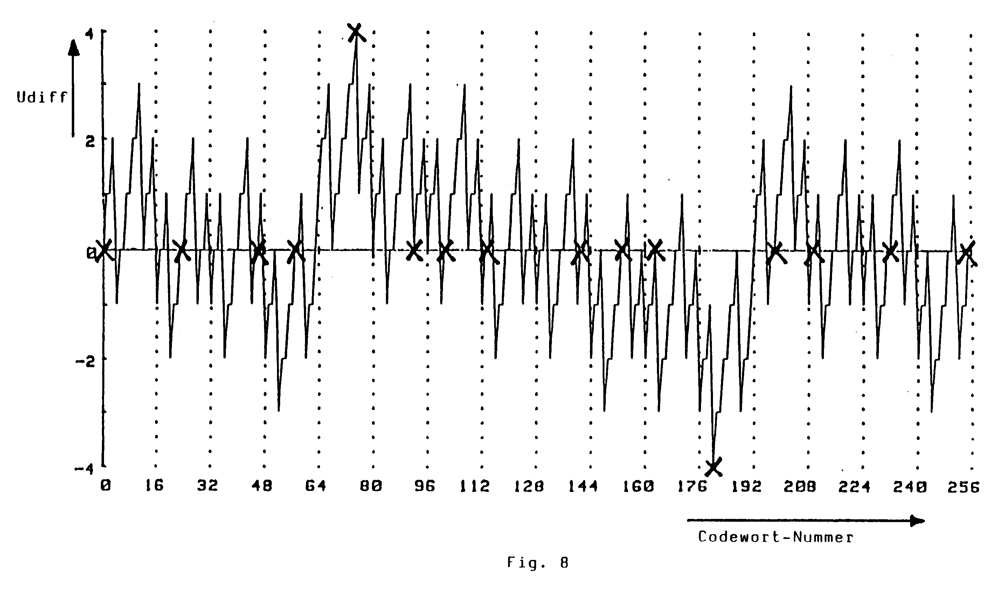

Fig. 8 zeigt für die zweite Codewort-Erkennungseinheit 51.2 berechnete Werte der Differenzspannungsimpulse Udiff. Die Darstellung entspricht denjeningen von Fig. 7. Auf der Ordinate sind die Impulshöhen in willkürlichen Einheiten aufgetragen, auf der Abszisse die 256 verschiedenen Codewörter mit 8 Bit Länge. Die Impulshöhe für das 75.

Codewort, das wiederum als Adresse der (zweiten) Codewort-Erkennungseinheit 51.2 gewählt ist, beträgt +4 in beliebigen Einheiten. Die Impulshöhen aller anderen Codewörter des Codesatzes von Fig. 6 beträgt dagegen 0 oder -4. Damit ist die Interpretationsdynamik ID zwischen den im Codesatz enthaltenen, zugelassenen Codewörtern wesentlich besser als im Fall der ersten Codewort-Erkennungseinheit 51.1. Weiter besteht ein deutlicher Unterschied zu allen nicht zugelassenen Codewörtern. Hieraus ergibt sich eine gewünschte Resistenz gegenüber geringen Codefehlern.

Die 8 (berechneten) Werte der Figuren 7 und 8 gelten für exakte Phasenrichtigkeit bzw. genaue Synchronisierung zwischen dem jeweiligen optischen Muster OM und dem Vergleichsmuster VM. Bei Phasenabweichungen zwischen den Mustern, wie sie in der Praxis natürlich auftreten, verschlechtern sich die Verhältnisse. Es ist jedoch bekannt, dass Phasenabweichungen bis zu etwa 15% der Länge eines Bits akzeptabel sind.

Die Codewort-Erkennungseinheiten 51.1 und 51.2 arbeiten mit sehr geringen Lichtleistungen. Sie sind robust gegen Störungen, gegen Phasenabweichungen, gegen Bitfehler, gegen Störgeräusche und gegenüber der erforderlichen Qualität der Licht-Bits. Damit arbeiten sie wesentlich besser als vergleichbare, rein elektronisch wirkende Einheiten. Dies beruht vor allem auf der ausgleichende Funktion der Integrationsglieder 63, 63.1, 63.2, welche auf Analogtechnik und nicht auf Digitaltechnik basieren. Hierdurch ergibt sich an einer entscheidenden Stelle der Gesamtvorrichtung eine Verminderung der erforderlichen Arbeitsgeschwindigkeit um einen wesentlichen Faktor.

Die Codewort-Erkennungseinheiten 51.1, 51.2 erlauben hiermit das schnelle und sichere Erkennen jeweils eines von mehreren Codemustern, insbesondere von Adressen-Mustern. Sie lassen sich damit in Zugriffseinheiten 13 einsetzen, die die Adressen vorbeilaufender Pakete "fliegend" überprüfen, d.h. quasi ohne zeitliche Verzögerung.

Die Erfindung erlaubt eine ganze Reihe von Variarten:
· Anstelle des beschriebenen Hadamard-C-Codes können auch andere Codesätze verwendet werden. Als Beispiel hierfür seien z.B. Codes genannt, die durch serielle, doppelte Verwendung von Hadamard-C-Codewörtern entstehen. Derartige Codes besitzen die doppelte Sequenzlänge und gleichviele oder erheblich mehr verschiedene Codewörter, je nach dem, wie der Code im speziellen aufgebaut ist.
· Der spezielle Aufbau der Codewort-Erkennungseinheiten 51.1, 51.2 kann mit handelsüblichen Optik- und Elektronik-Bausteinen erfolgen oder vorwiegend als LSI-Baustein (LSI = large scale integration).
· Der Sequenzgeber 75 kann entweder so aufgebaut sein, dass er das jeweilige Vergleichsmuster VM gespeichert enthält und dieses jeweils gesteuert durch die Steuerung 69 und im Takt des Taktgebers 72 ausgibt. Statt dessen kann er es jeweils mittels eines geeigneten Algorithmusses neu generieren oder das Vergleichsmuster VM von einer nicht gezeigten Einheit empfangen und zum optischen Schaltglied 57 weiterleiten.
· Die Schwellenschaltung 66 kann in einfachster Ausführung eine monostabile Kippschaltung sein. Sie kann aber auch eine aufwendigere Schaltung bilden, die mehrere Ansprechsschwellen aufweist. Hierdurch lassen sich z.B. genauere Angaben über die jeweilige Höhe der Spannungsimpulse U ermitteln.
· Die Diffenrenzbildungsstufe 85 kann entweder in Analogtechnik aufgebaut sein, z.B. als Differenzverstärker, oder in Digitaltechnik, z.B. als Subtraktionsstufe. Es ist weiter möglich, die Ausgänge der beiden optoelektrischen Wandler 60.1, 60.2 der zweiten Codewort-Erkennungseinheit 51.2 elektrisch miteinander zu verbinden. Dann ergibt sich ein dem so gebildeten gemeinsamen Ausgang zugeordnetes einziges Integrationsglied 63, an dem sich die Spannungsimpulse Udiff direkt aufbauen. In diesem Fall erübrigt sich somit eine gesonderte Differenzbildungsstufe 85. Handelt es sich bei den optoelektrischen Wandlern 60.1, 60.2 um Fotodioden, dann lassen sich diese Dioden problemlos elektrisch in Serie schalten. In diesem Fall bildet die elektrische Verbindung zwischen den Dioden den genannten gemeinsamen Ausgang, dessen Kapazität das gemeinsame, einzige Integrationsglied 63 bildet.
· Die Codewörter sind einzeln oder zu mehreren in jedem Paket, vorzugsweise in dessen Kopfteil enthalten. Sie können aber auch auf mehrere Bereiche der Pakete verteilt sein.
· Die Zugriffsknoten 12 können wie beschrieben an einer durchgehenden Faser 11 angeschlossen sein. Es ist aber auch möglich, die Codewort-Erkennungseinheit 51 in anderen Knoten einzusetzen, z.B. solchen, die den Lichtstrom jeweils elektrisch regenerieren.
· Das Integrationsglied 63 kann mittels elektronischer Mittel, insbesondere empfindlicher Eingangsverstärker verschieden gestaltet sein.

## Patentansprüche

1. Codewort-Erkennungseinheit (51) für einen Zugriffsknoten (12) einer optischen Übertragungseinrichtung (10),
· wobei die Übertragungseinrichtung (10) eine optische Übertragungsstrecke (11) aufweist, auf der ein ununterbrochener, gerichteter Bitstrom in Form einer Hell/Dunkel-Folge und mit einem gegebenen Bit- und Rahmentakt fliesst,
· wobei im Bitstrom regelmässig Signalinformation in Form optischer Muster (OM) enthalten ist,
· wobei der Zugriffsknoten (12) ausgerüstet ist zum Empfangen und zum Mitlesen dieser optischen Muster (OM),
gekennzeichnet,
- durch ein Schaltglied (57) mit einem optischen Eingang (53), wenigstens einem optischen Ausgang (80, 81, 82) und einem elektrischen Steuereingang (44), dessen optische Ein- (53) und Ausgänge (80, 81, 82) durch Optikpfade verbunden sind, die elektrisch durchlässig oder undurchlässig schaltbar sind, und dessen optischer Eingang (53) an die Übertragungstrecke (11) angeschlossen ist,
- durch einen Sequenzgeber (75), der an den Steuereingang (44) des Schaltgliedes (57) angeschlossen ist, und der jeweils phasengerecht zu einem optischen Muster (OM) am optischen Eingang (53) des Schaltgliedes (57) ein elektrisches Vergleichsmuster (VM) an den Steuereingang (44) abgibt,
- durch optoelektrische Wandler (60, 60.1, 60.2), die individuell jeweils einem optischen Ausgang (80, 81, 82) des Schaltgliedes (57) nachgeschaltet und ausgebildet sind zum Erzeugen einer zur empfangenen Lichtmenge proportionalen elektrischen Ladung (e),
- durch elektrische Integrationsglieder (63, 63.1, 63.2), die den Wandlern (60, 60.1, 60.2) nachgeschaltet sind, zum Ausbilden von Spannungsimpulsen (U, U₁, U₂) in Abhängigkeit der an den Wandlern (60, 60.1, 60.2) anfallenden Ladung (e),
- durch eine den Integrationsgliedern (63, 63.1, 63.2) nachgeschaltete Schwellenschaltung (66) zum Bewerten der von den Integrationsgliedern (63, 63.1, 63.2) abgegebenen Spannungsimpulse (U), und
- durch eine Steuerung (69) zum Steuern des Sequenzgebers (75), der Integrationsglieder (63, 63.1, 63.2) und der Schwellenschaltung (66).

2. Codewort-Erkennungseinheit (51) nach Anspruch 1,
dadurch gekennzeichnet,
dass das Schaltglied (57) als optischer Ein/Aus-Schalter mit einem einzigen Ausgang (80) ausgebildet ist.

3. Codewort-Erkennungseinheit (51) nach
Anspruch 1,
dadurch gekennzeichnet,
- dass das Schaltglied (57) als optischer Umschalter mit zwei Ausgängen (81, 82) ausgebildet ist,
- dass zwei optoelektrisch Wandler (60.1, 60.2) und zwei Integrationsglieder (63.1, 63.2) vorgesehen sind, und
- dass eine Differenzbildungsstufe (85) vorgesehen ist, die zwischen die beiden Integrationsglieder (63.1, 63.2) und die Schwellenschaltung (66) eingefügt ist zur Bildung eines Differenzsignals (Udiff) aus den von den Integrationsgliedern (63.1, 63.2) abgegebenen Spannungsimpulsen (U₁, U₂).

4. Codewort-Erkennungseinheit (51) nach
Anspruch 1,
dadurch gekennzeichnet,
- dass das Schaltglied (57) als optischer Umschalter mit zwei Ausgängen (81, 82) ausgebildet ist,
- dass zwei optoelektrische Wandler (60.1, 60.2) vorgesehen sind, und
- dass die Wandler (60.1, 60.2) elektrisch so miteinander verbunden sind, dass sie einen gemeinsamen, einzigen Ausganc haben, dem ein einziges Integrationsglied (63) zugeordnet ist zur Bildung eines Differenzspannungssignals.

5. Codewort-Erkennungseinheit (51) nach
Anspruch 1,
dadurch gekennzeichnet,
dass die optoelektrischen Wandler (60. 60.1, 60.2) als Fotodioden mit nachgeschalteten Verstärkern ausgebildet sind, und dass die Ausgangskapazitäten der Fotodiode zusammen mit den Eingangskapazitätem der zugeordneten Verstärker die elektronischen Integrationsglieder (63, 63.1, 63.2) bilden.

6. Anwendung von Codewort-Erkennungseinheiten (51) nach Anspruch 1 in einer Übertragungseinrichtung (10) mit einer optischen Übertragungsstrecke (11), in die eine Mehrzahl von Zugriffsknoten (12) seriell eingefügt sind und auf der adresscodierte Pakete im festen Pakettakt zirkulieren,
· wobei jeder Zugriffsknoten (12) eine Codewort-Erkennungseinheit (51) aufweist,
· wobei jedem Zugriffsknoten (12) und jedem Paket ein individuelles, unterscheidbares Codewort als Adresse zugeteilt ist, und
· wobei jeder Zugriffsknoten (12) auf den Pakettakt synchronisiert ist,
dadurch gekennzeichnet,
- dass in jedem Zugriffsknoten (12) das Codewort jedes durchlaufenden Paketes durch synchrones Einlesen eines diesem Codewort entsprechenden optischen Musters (OM) und eines dem Codewort des jeweiligen Zugriffsknotens (12) entsprechenden elektrischen Vergleichsmusters (VM) geprüft wird,
- dass durch jeweiliges Ansprechen der Schwellenschaltung (66) der Codewort-Erkennungseinheit (51) die Übereinstimmung von optischem Muster (OM) und Vergleichsmuster (VM) signalisiert wird, und
- dass die Codewörter einem gemeinsamen Hadamard-Code-Satz angehören.

7. Verwendung nach Anspruch 6,
dadurch gekennzeichnet,
dass die Codewörter einen gemeinsamen Hadamard-C-Code-Satz angehören.

## Claims

1. Code word recognition unit (51) for an access node (12) of optical transmission equipment (10),
· wherein the transmission equipment (10) comprises an optical transmission line (11) on which an uninterrupted, directed bit stream flows in the form of a brightness/darkness sequence and with a given bit and frame clock,
· wherein signal information is regularly contained in the bit stream in the form of optical patterns (OM),
· wherein the access node (12) is equipped for receiving and reading these optical patterns (OM), characterized
- by a switching element (57) comprising an optical input (53), at least one optical output (80, 81, 82) and an electrical control input (44), whose optical input (53) and outputs (80, 81, 82) are connected by optics paths which can be electrically switched so as to be blocked or unblocked, and whose optical input (53) is connected to the transmission line (11),
- by a sequence generator (75) which is connected to the control input (44) of the switching element (57), and which each time transmits an electrical comparison pattern (VM) to the control input (44) in phase with an optical pattern (OM) at the optical input (53) of the switching element (57),
- by optoelectrical transducers (60, 60.1, 60.2), each of which (60, 60.1, 60.2) is individually connected subsequent to an optical output (80, 81, 82) of the switching element (57) and constructed for generating an electrical charge (e) proportional to the received light quantity,
- by electrical integrators (63, 63.1, 63.2) which are connected subsequent to the transducers (60, 60.1, 60.2) for the purpose of forming voltage pulses (U, U₁, U₂) as a function of the charge (e) occurring at the transducers (60, 60.1, 60.2),
- by a threshold circuit (66) connected subsequent to the integrators (63, 63.1, 63.2) for evaluating the voltage pulses (U) transmitted by the integrators (63, 63.1, 63.2), and
- by a control unit (69) for controlling the sequence generator (75), the integrators (63, 63.1, 63.2) and the threshold circuit (66).

2. Code word recognition unit (51) according to claim 1, characterized in that the switching element (57) is constructed as an optical on/off switch with a single output (80).

3. Code word recognition unit (51) according to claim 1, characterized in that the switching element (57) is constructed as an optical reverse switch with two outputs (81, 82), in that two optoelectrical transducers (60.1, 60.2) and two integrators (63.1, 63.2) are provided, and in that a difference forming stage (85) is provided, which difference forming stage (85) is connected between the two integrators (63.1, 63.2) and the threshold circuit (66) for forming a difference signal (Udiff) from the voltage pulses (U₁, U₂) transmitted by the integrators (63.1, 63.2).

4. Code word recognition unit (51) according to claim 1, characterized in that the switching element (57) is constructed as an optical reverse switch with two outputs (81, 82), in that two optoelectrical transducers (60.1, 60.2) are provided, and in that the transducers (60.1, 60.2) are electrically connected with one another in such a way that they have a common, single output to which a single integrator (63) is assigned for forming a difference voltage signal.

5. Code word recognition unit (51) according to claim 1, characterized in that the optoelectrical transducers (60, 60.1, 60.2) are constructed as photodiodes with subsequently arranged amplifiers, and in that the output capacitances of the photodiodes, together with the input capacitances of the assigned amplifiers, form the electronic integrators (63, 63.1, 63.2).

6. Application of code word recognition units (51) according to claim 1 in transmission equipment (10) comprising an optical transmission line (11) in which a plurality of access nodes (12) are included serially and on which address-coded packets circulate in the fixed packet clock,
· wherein every access node (12) comprises a code word recognition unit (51),
· wherein every access node (12) and every packet is assigned an individual, distinguishable code word as address, and
· wherein every access node (12) is synchronized to the packet clock,
characterized in that the code word of every through-going packet is checked in every access node (12) by means of synchronously reading in an optical pattern (OM) corresponding to this code word and an electrical comparison pattern (VM) corresponding to the code word of the respective access node (12),
- in that the agreement of optical patterns (OM) and comparison patterns (VM) is signaled by means of a respective response of the threshold circuit (66) of the code word recognition unit (51), and
- in that the code words belong to a common Hadamard code set.

7. Use according to claim 7, characterized in that the code words belong to a common Hadamard C code set.

## Revendications

1. Unité de reconnaissance de mots de code (51) pour un noeud d'accès (12) d'un équipement optique de transmission (10),
. l'équipement de transmission (10) comportant une voie de transmission optique (11), sur laquelle se déplace un flux de bits ininterrompu orienté, sous forme d'une séquence d'états clair/sombre et selon un rythme de bits et de cadres donné,
. des informations de signaux en forme d'échantillons optiques (EO) étant contenus régulièrement dans le flux de bits;
. le noeud d'accès (12) étant équipé de manière à recevoir et à lire ces échantillons optiques (EO),
caractérisée,
- par un circuit commutateur (57) avec une entrée optique (53), au moins une sortie optique (80, 81, 82) et une entrée de commande électrique (44) , dont les entrées (53) et sorties (80, 81, 82) sont reliées par des sentiers optiques,qui peuvent être commutés électriquement dans un état de perméabilité ou un état d'imperméabilité , et dont l'entrée optique (53) est raccordée à la voie de transmission (11);
- par un émetteur de séquences (75) qui est raccordé à l'entrée de commande (44) de circuit commutateur (57) et qui remet, chaque fois en conformité avec la phase d'un échantillon optique (E0) qui se présente à l'entrée optique (53) du circuit commutateur (57), un échantillon électrique de comparaison (VM) à l'entrée de commande (44),
- par des convertisseurs optoélectriques (60, 60.1, 60.2) qui sont montés chaque fois individuellement en aval d'une sortie optique (80, 81, 82) du circuit commutateur (57) et réalisés de la sorte qu'il produisent une charge électrique (e) proportionnelle à la quantité de lumière reçue,
- par des éléments d'intégration électrique (63, 63.1, 63.2) montés en aval des convertisseurs (60, 60.1, 60.2) pour la formation d'impulsions de tension (U, U1, U2) en fonction de la charge (e) surgissant sur les convertisseurs (60, 60.1, 60.2),
- par un circuit à seuil (66) monté en aval des éléments d'intégration (63, 63.1, 63.2) pour l'interprétation des impulsions de tension (U) émises par les éléments d'intégration (63, 63.1, 63.2), et
- par une unité de commande (69) pour le pilotage de l'émetteur de séquences (75), des éléments d'intégration (63, 63.1, 63.2) et du circuit à seuil (66).

2. Unité de reconnaissance de mots de code (51) selon revendication 1, caractérisée en ce que le circuit commutateur (57) est réalisé comme un commutateur optique de mise en et hors circuit, avec une seule sortie (80).

3. Unité de reconnaissance de mots de code (51) selon revendication 1,
caractérisée en ce que
- le circuit commutateur (57) est réalisé sous forme d'un commutateur optique avec deux sorties (81, 82);
- deux convertisseurs optoélectriques (60.1, 60.2) et deux éléments d'intégration (63.1, 63.2) sont prévus, et
- qu'il est prévu un étage de formation d'une différence (85) inséré entre les deux éléments d'intégration (63.1, 63.2) et le circuit à seuil (66) pour la formation d'un signal différentiel (Udiff) à partir des impulsions de tension (U₁, U₂) émises par les éléments d'intégration (63.1, 63.2).

4. Unité de reconnaissance de mots de code (51) selon revendication 1,
caractérisée en ce que
- le circuit commutateur (57) est réalisé sous forme d'un commutateur optique avec deux sorties (81, 82),
- deux convertisseurs optoélectriques (60.1, 60.2) sont prévus, et
- que les convertisseurs (60.1, 60.2) sont reliés électriquement de sorte qu'ils ont une seule sortie commune à laquelle est alloué un seul élément d'intégration (63) pour la formation d'un signal de tension différentiel.

5. Unité de reconnaissance de mots de code (51) selon revendication 1,
caractérisée en ce que
les convertisseurs optoélectriques (60, 60.1, 60.2) sont réalisés sous forme de photodiodes avec des amplificateurs montés en aval, et que les capacités de sortie des photodiodes et les capacités d'entrée des amplificateurs y relatifs forment ensemble les éléments d'intégration électroniques (63, 63.1, 63.2).

6. Utilisation d'unités de reconnaissance de mots de code (51) selon revendication 1 dans un équipement de transmission (10) avec une voie de transmission optique (11) dans laquelle est insérée une multitude de noeuds d'accès (12) et sur laquelle circulent des paquets à adresse codée dans un rythme de paquets fixe,
. chaque noeud d'accès (12) présentant une unité de reconnaissance de mots de code (51),
. un mot de code individuel discernable étant attribué à chaque noeud d'accès (12) et à chaque paquet comme adresse, et
. chaque noeud d'accès (12) étant synchronisé par rapport au rythme de paquets,
caractérisée en ce que
- dans chaque noeud d'accès (12), le mot de code de chaque paquet passant est vérifié par une lecture synchrone d'un échantillon optique (OM) correspondant à ce mot de code et et d'un échantillon de comparaison électrique (VM ) correspondant au mot de code du noeud d'accès respectif (12),
- que la conformité de l'échantillon optique (OM) avec l'échantillon de comparaison (VM) est signalée par une activation du circuit à seuil (66) de l'unité de reconnaissance de mots de code (51), et
- que les mots de code appartiennent à une série commune de code Hadamard.

7. Utilisation selon revendication 6,
caractérisée en ce que
les mots de code appartiennent à une série commune de code C Hadamard.
